# EUROPÄISCHE PATENTSCHRIFT

(11) **EP 1 926 644 B1**
(45) Veröffentlichungstag und Bekanntmachung des Hinweises auf die Patenterteilung: **17.02.2010**
(21) Anmeldenummer: 06778358.9
(22) Anmeldetag: 25.08.2006
(51) Int. Cl.: B60T 8/44, B60T 8/40, B60T 13/14

(54) **BREMSSYSTEM FÜR KRAFTFAHRZEUGE**
MOTOR VEHICLE BRAKING SYSTEM
SYSTEME DE FREINAGE POUR VEHICULES AUTOMOBILES

(30) Priorität: 15.09.2005 DE 102005044202; 15.09.2005 DE 102005044201; 04.10.2005 DE 102005063301; 04.10.2005 DE 102005047532; 05.04.2006 DE 102006015905
(43) Veröffentlichungstag der Anmeldung: 04.06.2008
(73) Patentinhaber: Continental Teves AG & Co. oHG, 60488 Frankfurt (DE)
(72) Erfinder: SCHIEL, Lothar, 65719 Hofheim (DE); DRUMM, Stefan, 55291 Saulheim (DE); RIETH, Peter, 65343 Eltville (DE)
(86) Internationale Anmeldenummer: PCT/EP2006/065700
(87) Internationale Veröffentlichungsnummer: WO 2007/031398

(56) Entgegenhaltungen:
- EP-A2- 1 078 833
- WO-A-2005/005214
- WO-A-2005/007476
- WO-A-2006/042823
- DE-A1- 10 321 721
- DE-A1-102004 025 638

## Beschreibung

Die Erfindung betrifft ein Bremssystem für Kraftfahrzeuge vom Typ "brake-by-wire" mit
- einem Hauptzylinder, an den Radbremskreise angeschlossen sind,
- einem ersten Kolben, der über eine Betätigungskräfte übertragende Druckstange mit einem Bremspedal gekoppelt ist,
- einem zweiten Kolben, über den der Hauptzylinder betätigt wird,
- einem dritten Kolben, der vom ersten Kolben betätigbar ist, und der in eine kraftübertragende Verbindung mit dem zweiten Kolben bringbar ist,
- mit mindestens einem elastischen Element, das einen Pedalwegsimulator bildet, der in der Betriebsart "brake-by-wire" dem Fahrzeugführer ein angenehmes Pedalgefühl vermittelt,
- mit einem mit hydraulischem Druck beaufschlagbaren Zwischenraum zwischen dem zweiten und dem dritten Kolben, wobei eine Druckbeaufschlagung des Zwischenraums den zweiten und den dritten Kolben in entgegengesetzter Richtung belastet,
- mit einer vom dritten Kolben begrenzten, hydraulischen, mittels eines Sperrventils absperrbaren Kammer, mit der bei Bedarf eine Bewegung des dritten Kolbens in Betätigungsrichtung verhindert wird,
- mit einer Druckbereitstellungseinrichtung, die unter Hochdruck stehendes Druckmittel zum Befüllen des Zwischenraums bereithält,
- mit einem unter Atmosphärendruck stehenden ersten Druckmittelvorratsbehälter, der aus dem Zwischenraum abströmendes Druckmittel aufnimmt,
- mit einem an die Druckbereitstellungseinrichtung und den ersten Druckmittelvorratsbehälter hydraulisch angeschlossenen Druckregelventil zur Regelung des im Zwischenraum eingesteuerten Druckes, das unter Zwischenschaltung von Betätigungskraftübertragungsmitteln mit einer Betätigungskraft ansteuerbar ist, sowie
- mit Mitteln zur elektrischen Regelung des im Zwischenraum eingesteuerten Druckes.

In der Kraftfahrzeugtechnik finden "brake-by-wire"-Bremssysteme eine immer größere Verbreitung. Bei diesen Bremssystemen kann die Bremse einerseits ohne aktives Zutun des Fahrzeugführers aufgrund elektronischer Signale "fremd-" bestätigt werden. Diese elektronischen Signale können beispielsweise von einem elektronischen Stabilitätsprogramm ESP oder einem Abstandsregelsystem ACC ausgegeben werden. Andererseits kann auf eine Betätigung des Bremssystems ganz oder teilweise verzichtet werden, wenn eine vom Fahrzeugführer über eine Bremspedalbetätigung angeforderte Bremswirkung beispielsweise durch Umschalten eines elektrischen Fahrzeugantriebs in einen Generatorbetrieb erzielt wird. In beiden Fällen entspricht der Betätigungszustand der Bremse nicht der vom Fahrzeugführer vorgegebenen Bremspedalbetätigung. Bei herkömmlichen Bremssystemen führt dies zu einer Rückwirkung auf das Bremspedal. Die Bremspedalcharakteristik - d.h. die Abhängigkeit des Bremspedalwegs von der Bremspedalkraft ist durch die beschriebene Rückwirkung gestört. Dieser Rückwirkungseffekt auf das Bremspedal kann für den Fahrer überraschend und unangenehm sein, so dass der Fahrer in einer kritischen Situation des Straßenverkehrs das Bremspedal nicht in einem dieser Situation angepassten Maße betätigt, da er durch die für ihn nicht vorhersehbare Rückwirkung auf das Bremspedal irritiert wird.

Ein Bremssystem der eingangs genannten Gattung ist aus der DE 10 321 721 A1 bekannt. Das in der genannten Veröffentlichung offenbarte Bremssystem kann u. a. bei Fahrzeugen mit einem Hybridantrieb verwendet werden, bei denen so genannte Rekuperationsbremsvorgänge durchgeführt werden. Das der Regelung des im erwähnten Zwischenraum.eingesteuerten Druckes dienende Druckregelventil wird bei dem vorbekannten Bremssystem mittels mechanischer Kraftübertragungsmittel angesteuert, die wirkungsmäßig zwischen dem ersten Kolben und dem Ventilkörper des Druckregelventils angeordnet sind. Als Mittel zur elektrischen Regelung des im Zwischenraum eingesteuerten Druckes sind elektromagnetisch ansteuerbare Ventileinrichtungen vorgesehen, die als analog regelbare, stromlos geschlossene (SG-) 2/2-Wegeventile ausgebildet sind. Als nachteilig wird bei dem vorbekannten Bremssystem die Tatsache empfunden, dass in der "brake-by-wire"-Betriebsart das Druckregelventil durch das erwähnte Absperren der Kammer außer Funktion gesetzt wird, so dass der "by-wire"-Bremsdruck ausschließlich über die elektromagnetisch ansteuerbaren Ventileinrichtungen eingesteuert werden kann, wobei das Potential des Druckregelventils zum Steuern der notwendigen Druckmitte.lvolumenströme ungenutzt bleibt. Weiterhin wird bei dem vorbekannten Bremssystem die Tatsache als nachteilig empfunden, dass während dessen Betrieb Druckmittel aus der Druckbereitstellungseinrichtung in die Radbremskreise strömt. Für die Radbremskreise gelten weitaus höhere Anforderungen an das Druckmittel in Bezug auf eine mögliche Kontamination durch Gasblasen, so dass vorbekannten Bremssystem nur absolut gasdichte Hydrospeicher eingesetzt werden können.

Es ist daher Aufgabe der vorliegenden Erfindung, ein Bremsesystem der eingangs genannten Gattung vorzuschlagen, bei dem die Nachteile beseitigt sind.

Diese Aufgabe wird erfindungsgemäß dadurch gelöst, dass bei der elektrischen Regelung die Einsteuerung des Druckes im Zwischenraum über das Druckregelventil erfolgt. Das Druckregelventil kann vorzugsweise sowohl pedal- als auch hydraulisch ansteuerbar ausgebildet sein.

Bei einer vorteilhaften Weiterbildung der Erfindung sind die Druckbereitstellungseinrichtung, das Druckregelventil und der Zwischenraum sowie der erste Druckmittelvorratsbehälter einem ersten Bremskraftverstärkerdruckmittelkreis zugeordnet, wobei während des Betriebs des Bremssystems zwischen dem ersten Bremskraftverstärkerdruckmittelkreis und den Radbremskreisen kein Druckmittelaustausch stattfindet. Durch diese Maßnahmen-wird die Betriebssicherheit des erfindungsgemäßen Bremssystems erheblich erhöht, da keine Gefahr einer Verseuchung der Radbremskreise durch im ersten Bremskraftverstärkerdruckmittelkreis evtl. auftretende Gasblasen besteht.

Bei einer anderen Ausgestaltung des Erfindungsgegenstandes sind die Betätigungskraftübertragungsmittel als hydraulische Kraftübertragungsmittel ausgebildet.

Die hydraulischen Kraftübertragungsmittel sind vorzugsweise einem zweiten Bremskraftverstärkerdruckmittelkreis zugeordnet, wobei während des Betriebs des Bremssystems zwischen dem zweiten Bremskraftverstärkerdruckmittelkreis, dem ersten Bremskraftverstärkerdruckmittelkreis und den Radbremskreisen kein Druckmittelaustausch stattfindet. Damit ist es möglich, im Druckbereitstellungsmodul kostengünstigere Hydrospeicher einzusetzen als vorbekannten Bremssystem - beispielsweise einen Gasdruckspeicher, bei dem eine Elastomermembran ein Gasvolumen von einem Hydraulikvolumen trennt und bei dem es in Kauf genommen werden kann, dass während der Fahrzeuglebensdauer ein geringer Teil des Gases durch diese Membrane hindurch diffundiert und sich im Druckmittel löst. Gasblasen verursachen in Hydrauliksystemen stets dann Probleme, wenn durch ein Komprimieren dieser Gasblasen ein hydraulischer Geberzylinder seinen maximalen Verfahrweg in Betätigungsrichtung ausnutzt und dadurch eine weitere hydraulische Druckbeaufschlagung eines Nehmerzylinder nicht mehr möglich ist. Im ersten Bremskraftverstärkerdruckmittelkreis ist kein Geberzylinder vorgesehen. Das Druckmittel zur Beaufschlagung des Zwischenraums wird von einem Hydrospeicher bzw. einer Pumpe abgegeben, wodurch ein Druckmittelvolumen zur Verfügung steht, das ausreicht um Gasblasen beliebiger Größe zu komprimieren. Folglich wird die Funktion des Bremssystems durch Gasblasen im ersten Bremskraftverstärkerdruckmittelkreis nicht gestört und ist - weil unempfindlich gegen Gasblasen - sicherer zu betreiben als ein System, bei dem empfindliche Hydraulikkreise durch besondere Maßnahmen vor Gasblasen geschützt werden müssen.

Bei einer anderen vorteilhaften Weiterbildung des Erfindungsgegenstandes ist der zweite Bremskraftverstärkerdruckmittelkreis durch eine an die vorhin erwähnte Kammer angeschlossene erste Verbindungsleitung, eine hydraulische Anordnung, die der Betätigung des Druckregelventils dient, eine zweite Verbindungsleitung, sowie einen zweiten, unter Atmosphärendruck stehenden Druckmittelvorratsbehälter gebildet, mit dem die zweite Verbindungsleitung verbindbar ist. Dieser Bremskraftverstärkerdruckmittelkreis stellt hydraulische Kraftübertragungsmittel zur Verfügung, die die vom ersten Kolben ausgeübte Betätigungskraft auf das Druckregelventil übertragen, wobei es von besonderem Vorteil ist, dass diese hydraulische Ansteuerung des Druckregelventils es erlaubt, das Druckregelventil außerhalb des dritten Kolbens anzuordnen. Dies spart Bauraum und Dichtungen und es vermeidet den technischen Aufwand, der im vorbekannten Bremssystem betrieben werden muss, um den von der Druckbereitstellungseinrichtung gelieferten Hochdruck in den dritten Kolben zu bringen.

Außerdem ist es besonders vorteilhaft, wenn die hydraulische Anordnung durch einen ersten Druckraum, der über die erste Druckmittelleitung an die Kammer angeschlossen ist, einen zweiten Druckraum, der über die zweite Druckmittelleitung mit dem zweiten Druckmittelvorratsbehälter verbindbar ist, sowie einen die Druckräume voneinander trennenden Stufenkolben gebildet ist, von dem eine Kraft auf den Ventilkörper des Druckregelventils übertragbar ist. Mit einem über die erste Druckmittelleitung übertragenen Druck wird der Stufenkolben entgegen der Betätigungsrichtung und mit einem Druck in der zweiten Druckmittelleitung in Betätigungsrichtung belastet.

In einer bevorzugten Ausführungsform wird der zweite Druckraum von der Fläche des Stufenkolbens mit größerem Querschnitt begrenzt, während der erste Druckraum als Ringraum ausgebildet ist, der von der Ringfläche des Stufenkolbens begrenzt wird. Dadurch wird erreicht, dass bei gleichem Druck in der ersten und zweiten Druckmittelleitung eine resultierende Belastung des Stufenkolbens in Betätigungsrichtung entsteht.

Durch ein stromlos offenes Elektromagnetventil wird erreicht, dass in dessen unbestromtem Zustand der Druck in beiden Druckmittelleitungen gleich ist. Durch ein Schließen des Ventils wird sowohl der dritte Kolben als auch der Stufenkolben festgesetzt.

Weitere vorteilhafte Ausführungen des erfindungsgemäßen Bremssystems sind in den Unteransprüchen 9 bis 34 aufgeführt.

Die vorliegende Erfindung wird nachfolgend an drei Ausführungsbeispielen unter Bezugnahme auf die beiliegende schematische Zeichnung näher erläutert, wobei die gleichen Komponenten mit den gleichen Bezugszeichen versehen sind. In der Zeichnung zeigen:
Fig.1 den Aufbau einer ersten Ausführung des erfindungsgemäßen Bremssystems;
Fig. 2 den Aufbau einer zweiten Ausführung des erfindungsgemäßen Bremssystems; und
Fig. 3 den Aufbau einer gegenüber der zweiten Ausführung leicht modifizierten dritten Ausführung des erfindungsgemäßen Bremssystems.

Das in der Zeichnung dargestellte erfindungsgemäße Bremssystem besteht im Wesentlichen aus einer Betätigungseinrichtung 1, einer hydraulischen Steuereinheit 2, wobei die Betätigungseinheit und die Steuereinheit einen Bremskraftverstärker bilden, sowie einem dem Bremskraftverstärker wirkungsmäßig nachgeschalteten Hauptbremszylinder bzw. Tandemhauptzylinder 3, an dessen nicht dargestellte Druckräume Radbremskreise I, II angeschlossen sind, die unter Zwischenschaltung eines bekannten ABS/ESP-Hydroaggregats bzw. eines steuerbaren Radbremsdruckmodulationsmoduls 4 Radbremsen 5 - 8 eines Kraftfahrzeuges mit hydraulischem Druckmittel versorgen. Dem Radbremsdruckmodulationsmodul 4 ist eine elektronische Steuer- und Regeleinheit 54 zugeordnet. Die Betätigungseinrichtung 1, die in einem Gehäuse 20 angeordnet ist, an das der Tandemhauptzylinder 3 angeschlossen ist, ist über ein Bremspedal 9 ansteuerbar, das über eine Betätigungsstange 10 mit einem ersten Kolben 11 der Betätigungseinrichtung 1 wirkungsmäßig verbunden ist. Der Betätigungsweg des Bremspedals 9 wird mittels eines Wegsensors 19 erfasst, der den Weg des ersten Kolbens 11 sensiert. Zum gleichen Zweck kann jedoch auch ein Drehwinkelsensor verwendet werden, der den Drehwinkel des Bremspedals 9 erfasst. Der erste Kolben 11 ist in einem dritten Kolben 13 angeordnet, in dem er eine Druckkammer 14 begrenzt, die eine Druckfeder 15 aufnimmt, die bei unbetätigtem Bremspedal 9 den ersten Kolben 11 zur Anlage am dritten Kolben 13 bringt. Alternativ oder zusätzlich kann im Bereich der Druckstange 10 oder des Bremspedals 9 eine Pedalrückstellfeder vorgesehen sein. Die Druckkammer 14, deren Funktion später erläutert wird, ist in unbetätigtem Zustand der Betätigungseinrichtung 1 mit einem zweiten Druckmittelvorratsbehälter 18 verbunden. Der dritte Kolben 13 wirkt mit einem zweiten Kolben 12 zusammen, der den Primärkolben des Tandemhauptzylinders 3 bildet, wobei im dargestellten Beispiel zwischen dem zweiten und dem dritten Kolben 12,13 ein Druckübersetzungskolben 16 angeordnet ist. Zwischen dem dritten Kolben 13 und dem Druckübersetzungskolben 16 ist ein Zwischenraum 21 begrenzt, durch dessen Beaufschlagen mit einem hydraulischen Druck der dritte Kolben 13 an einem im Gehäuse 20 ausgebildeten Anschlag 22 gehalten wird, während der Druckübersetzungskolben 16 und damit der Primärkolben 12 des Tandemhauptzylinders im Sinne eines Druckaufbaus im Tandemhauptzylinder 3 beaufschlagt werden. Eine aus dieser Belastung resultierende Bewegung des Übersetzungskolbens 16 wird mittels eines zweiten Wegsensors 23 erfasst. Außerdem begrenzt der dritte Kolben 13 im Gehäuse 20 eine hydraulische Kammer 17, deren Funktion ebenfalls im nachfolgenden Text erläutert wird.

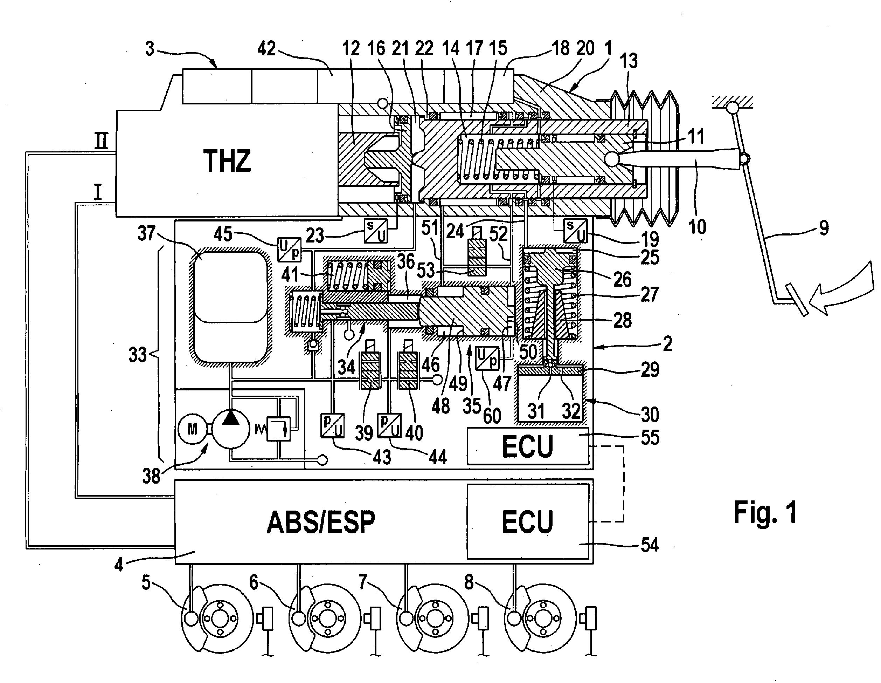

Weiterhin ist Fig. 1 zu entnehmen, dass die vorhin erwähnte Druckkammer 14 über eine absperrbare Verbindungsleitung 24 mit einer Simulatorkammer 25 in Verbindung steht, die von einem Simulatorkolben 26 begrenzt wird. Dabei wirkt der Simulatorkolben 26 mit einer Simulatorfeder 27 sowie einer der Simulatorfeder 27 parallel geschalteten Elastomerfeder 28 zusammen. Dabei bilden die Simulatorkammer 25, der Simulatorkolben 26, die Simulatorfeder 27 sowie die Elastomerfeder 28 einen Pedalwegsimulator, der dem Fahrzeugführer bei der Betätigung des Bremssystems das gewohnte Pedalgefühl vermittelt, das einer üblichen Bremspedalcharakteristik entspricht. Dies bedeutet, dass bei geringem Bremspedalweg der Widerstand langsam ansteigt und bei größerem Bremspedalweg überproportional zunimmt. Zur Dämpfung der Bewegung des Simulatorkolbens 26 steht dieser mit einem Kolben 29 einer pneumatischen Dämpfungseinrichtung 30 in Verbindung, die Kanäle 31, 32 mit strömungsrichtungsabhängiger Drosselwirkung aufweist, wobei diese Kanäle vorzugsweise im Kolben 29 angeordnet sind. Die hydraulische Verbindungsleitung 24 zwischen der Simulatorkammer 25 und der Druckkammer 14 bzw. dem ersten Druckmittelvorratsbehälter 18 wird durch eine Bewegung des dritten Kolbens 13 in Betätigungsrichtung des Hauptbremszylinders 3 abgesperrt.

Die vorhin erwähnte hydraulische Steuereinheit 2 besteht im Wesentlichen aus einer Druckbereitstellungseinrichtung 33, einem Druckregelventil 34, einer hydraulischen Anordnung 35 zur pedalgesteuerten Betätigung des Druckregelventils 34, sowie einer sowohl mit dem Druckregelventil 34 als auch der hydraulischen Anordnung 35 zusammenwirkenden Vorsteuerkammer 36, die wiederum mit Elektromagnetventilen (39, 40) hydraulisch verbunden ist. Die Druckbereitstellungseinrichtung 33 wird durch einen hydraulischen Hochdruckspeicher 37 sowie ein Motor-Pumpen-Aggregat 38 zum Aufladen des Hochdruckspeichers 37 gebildet, wobei der Ausgang der Druckbereitstellungseinrichtung 33 einerseits über das Druckregelventil 34 mit dem Zwischenraum 21, und andererseits über ein elektrisch analog regelbares, vorzugsweise stromlos geschlossenes 2/2-Wegeventil 39 (Druckaufbauventil) mit der Vorsteuerkammer 36 verbindbar ist. Das Motor-Pumpen-Aggregat 38 ist vorzugsweise als eine von den anderen Komponenten der hydraulischen Steuereinheit abgesetzte Baueinheit ausgebildet und mit körperschallisolierenden Befestigungen und Hydraulikverbindungen ausgestattet. Die Vorsteuerkammer 36, an die ein hydraulisches Volumenaufnahmeelement 41 angeschlossen ist, steht andererseits unter Zwischenschaltung eines zweiten, elektrisch analog regelbaren, vorzugsweise stromlos offenen 2/2-Wegeventils 40 (Druckabbauventil) mit einem ersten Druckmittelvorratsbehälter 42 in Verbindung, mit dem der Zwischenraum 21 über das Druckregelventil 34 verbindbar ist. Dabei sind die Druckbereitstellungseinrichtung 33, das Druckregelventil 34, der Zwischenraum 21 sowie der erste Druckmittelvorratsbehälter 42 einem ersten Bremskraftverstärkerdruckmittelkreis zugeordnet, der von den Radbremskreisen I, II vollständig getrennt ist. Drucksensoren 43, 44 und 45 dienen dem Erfassen des von der Druckbereitstellungseinrichtung 33 bereitgestellten Druckes, des in der Vorsteuerkammer 36 eingesteuerten Druckes sowie des im Zwischenraum 21 herrschenden Druckes.

Wie Fig. 1 außerdem entnehmbar ist, wird die hydraulische Anordnung 35 durch einen ersten Druckraum 46, einen zweiten Druckraum 47 sowie einen die Druckräume 46, 47 voneinander trennenden Stufenkolben 48 gebildet. Dabei ist der erste Druckraum 46 als ein Ringraum ausgebildet, der von der Ringfläche 49 des Stufenkolbens 48 begrenzt wird, während der zweite Druckraum 47 von der Fläche 50 des Stufenkolbens 48 mit größerem Querschnitt begrenzt wird. Der erste Druckraum 46 ist mittels einer ersten Druckmittelleitung 51 an die vorhin erwähnte Kammer 17 angeschlossen. Der zweite Druckraum 47 ist mittels einer zweiten Druckmittelleitung 52 an die Druckkammer 14 angeschlossen und über diese mit dem zweiten Druckmittelvorratsbehälter 18 verbindbar. Ein zwischen der ersten 51 und der zweiten Druckmittelleitung 52 geschaltetes Sperrventil 53 ermöglicht ein Absperren der Kammer 17 und des Druckraums 46 gegenüber dem zweiten Druckmittelvorratsbehälter 18, wodurch eine Bewegung des dritten Kolbens 13 in Betätigungsrichtung verhindert wird. Die Kammer 17, die erste Druckmittelleitung 51, die hydraulische Anordnung 35, das Sperrventil 53, die zweite Druckmittelleitung 52, die Druckkammer 14, die Verbindungsleitung 24, die Simulatorkammer 25 sowie der zweite Druckmittelvorratsbehälter 18 bilden einen zweiten Bremskraftverstärkerdruckmittelkreis, der vom ersten Bremskraftverstärkerdruckmittelkreis sowie von den beiden Radbremskreisen I, II vollständig getrennt ist. Dem Bremskraftverstärker ist eine eigene elektronische Steuereinheit 55 zugeordnet, die mit der vorhin erwähnten elektronischen Steuer- und Regeleinheit 54 zusammenwirkt und die der Erfassung von Sensordaten, der Verarbeitung dieser Daten, dem Austausch von Daten mit anderen Steuereinheiten, der Ansteuerung des Motor-Pumpen-Aggregats 33, der Druckregelventile 39, 40 sowie der Bremsleuchten des Fahrzeugs dient.

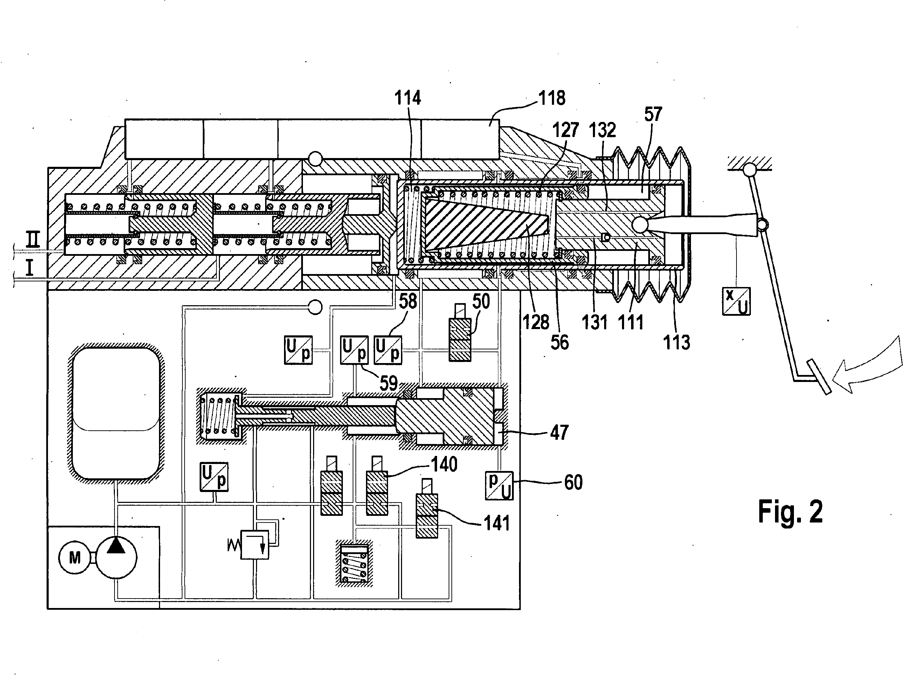

Bei der in Fig. 2 gezeigten zweiten Ausführung des erfindungsgemäßen Bremssystems wird die im Zusammenhang mit Fig. 1 erwähnte Druckkammer, die bei der zweiten Ausführung mit dem Bezugszeichen 114 versehen ist, im dritten Kolben 113 von einem vierten Kolben 56 begrenzt. Der vierte Kolben 56, in dem der erste Kolben 111 abgedichtet verschiebbar geführt ist, nimmt eine erste Druckfeder 127 sowie eine der ersten Druckfeder 127 parallel geschaltete Elastomerfeder 128 auf. Die genannten Federn 127, 128 bilden den im Zusammenhang mit Fig. 1 erwähnten, dort jedoch in der hydraulischen Steuereinheit 2 angeordneten Pedalwegsimulator, wobei die Druckfeder 127 zwischen dem vierten Kolben 56 und dem ersten Kolben 111 eingespannt ist und einen vom Differenzweg der beiden Kolben linear abhängigen Kraftanteil überträgt, während die Elastomerfeder 128, die koaxial zur Druckfeder 127 radial innen liegend angeordnet ist, einen progressiv mit dem Differenzweg anwachsenden Anteil der am Bremspedal 9 wirkenden Betätigungskraft auf den vierten Kolben 56 überträgt. Der pneumatischen Dämpfung der Bewegung des ersten Kolbens 111 dienen im ersten Kolben 111 ausgebildete Kanäle 131, 132, die eine strömungsrichtungsabhängige Drosselwirkung aufweisen und den Innenraum des vierten Kolbens 56 mit der Atmosphäre verbinden. Die Funktion des analog regelbaren 2/2-Wegeventils 40 in Fig. 1 wird bei der zweiten Ausführung durch eine Parallelschaltung eines stromlos geschlossenen (SG-) Schaltventils 140 mit einem stromlos offenen (SO-) Schaltventils 141 erfüllt. Ansonsten entspricht der Aufbau des in Fig. 2 dargestellten Bremssystems dem des Bremssystems, das im Zusammenhang mit Fig. 1 erläutert wurde.

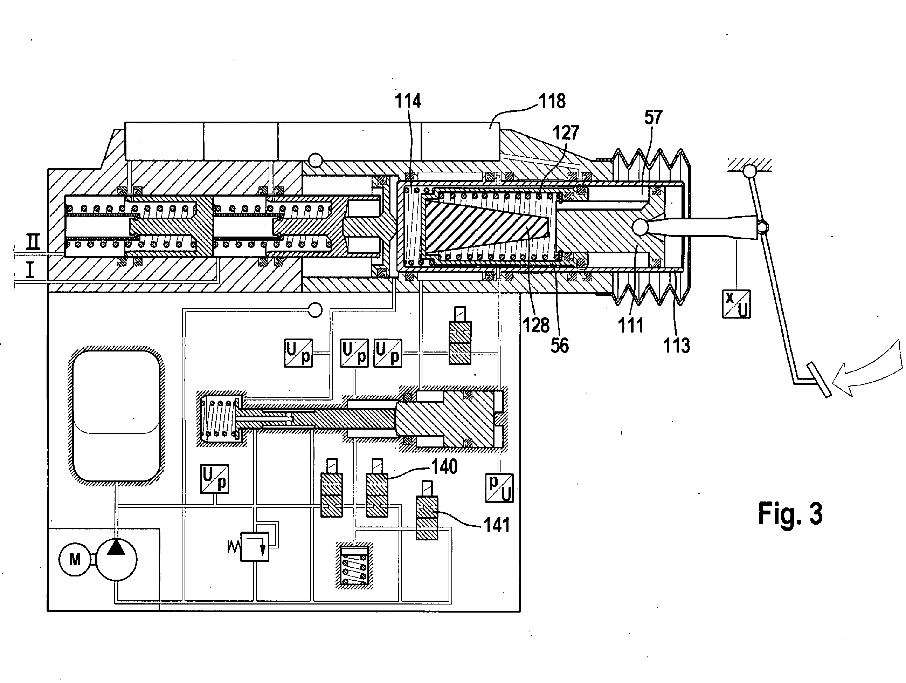

Der Aufbau des in Fig. 3 dargestellten dritten Ausführungsbeispiels entspricht weitestgehend dem Aufbau des Bremssystems gemäß Fig. 2. Der im Zusammenhang mit Fig. 2 erwähnte Absperrraum 57 steht jedoch mit dem Innenraum des vierten Kolbens 56 in Verbindung, so dass ein "nasser", d.h. mit Druckmittel gefluteter Pedalwegsimulator realisiert wird.

Im nachfolgenden Text wird die Funktionsweise des erfindungsgemäßen Bremssystems im Zusammenhang mit Fig. 1 näher erläutert.

Der erste Betriebsmodus entspricht einer rein elektrischen, der sog. "Brake-by-wire"-Betriebsart, bei der sämtliche Komponenten des Bremssystems intakt sind und einwandfrei arbeiten. In diesem Modus werden zum Aufbau eines hydraulischen Druckes im Zwischenraum die analog regelbaren 2/2-Wegeventile 39, 40 umgeschaltet, so dass der von der Druckbereitstellungseinrichtung 33 bereit gestellte Druck der Vorsteuerkammer 36 zugeführt wird. Der in der Vorsteuerkammer 36 eingesteuerte Druck hält den Stufenkolben 48 in der in Fig. 1 gezeigten Ausgangsstellung und verschiebt den Ventilkörper des Druckregelventils 34 in der Zeichnung nach links, so dass der Zwischenraum 21 mit Hochdruck beaufschlagt wird. Durch die Druckwirkung wird der dritte Kolben 13 am Anschlag 22 gehalten und der Übersetzungskolben 16 nach links verschoben, wodurch der Hauptbremszylinder 3 betätigt wird. Zum Zweck des Druckhaltens wird das analog regelbare 2/2-Wegeventil 39 wieder geschlossen.

Für einen Druckabbau wird das analog regelbare 2/2-Wegeventil 40 geöffnet, während das 2/2-Wegeventil 39 geschlossen bleibt. Dabei strömt Druckmittel aus der Vorsteuerkammer 36 in den ersten Druckmittelvorratsbehälter 42. Dies bewirkt ein Umschalten des Druckregelventils 34 in eine Druckabbaustellung, in der der Zwischenraum 21 ebenfalls mit dem ersten Druckmittelvorratsbehälter 42 verbunden ist.

Die Vorgänge der Ansteuerung der analog regelbaren 2/2-Wegeventile 39, 40 werden von der elektronischen Steuereinheit 55 derart koordiniert, dass der Druck im Zwischenraum 21 einem Solldruckwert angenähert wird. Dieser Solldruckwert ergibt sich einerseits aus einer erfassten Betätigungskomponente des Bremspedals 9 und andererseits aus einer Fremdbetätigungskomponente. Die Betätigungskomponente des Bremspedals 9 wird aus dem Betätigungsweg des Bremspedals 9 bzw. des ersten Kolbens 11 und aus dem hydraulischen Druck in der Druckkammer 14 ermittelt, der mittels des Drucksensors 60 erfasst wird und der der Betätigungskraft des Bremspedals 9 proportional ist.

In einem zweiten Betriebsmodus, der durch eine Störung der Elektronik charakterisiert ist und einer ersten Rückfallebene entspricht, ist kein elektronisch gesteuerter Druckaufbau in der Vorsteuerkammer 36 möglich. Die Betätigung des Druckregelventils 34 erfolgt durch eine mechanische Kraftübertragung vom Stufenkolben 48 auf den Ventilkörper des Druckregelventils 34, wobei der im Hochdruckspeicher 37 herrschende Druck verwendet wird. Ansonsten erfolgt der Druckaufbau im Zwischenraum 21 wie im ersten Betriebsmodus.

In einem dritten Betriebsmodus, der durch das Fehlen eines von der hydraulischen Druckbereitstellungseinrichtung 33 erzeugten Druckes charakterisiert ist, kann das Bremssystem rein mechanisch betätigt werden. Der dritte Kolben 13 bewegt sich unter dem Einfluss einer Bremspedalbetätigung von seinem Anschlag 22 weg und verschiebt den zweiten Kolben 12 durch mechanischen Kontakt. Die Betätigung des Hauptbremszylinders 3 erfolgt ausschließlich mit Muskelkraft des Fahrzeugführers.

In einem vierten Betriebsmodus, der einer Rekuperationsbremsung entspricht, muss der im Zwischenraum 21 eingesteuerte Druck trotz einer Betätigung des Bremspedals 9 bis auf Null reduziert werden können. Zu diesem Zweck wird das Sperrventil 53 geschlossen, so dass, obwohl die Kammer 17 mit dem Ringraum 46 verbunden ist, sowohl die Kammer 17 als auch der Ringraum 46 abgesperrt sind. Durch das Absperren der genannten Räume 17, 46 wird eine Bewegung des dritten Kolbens 13 und des Stufenkolbens 48 in der Betätigungsrichtung verhindert.

Durch die vorliegende Erfindung wird eine einfach aufgebaute Bremsanlage erreicht, bei der in einer "Brake-by-wire"-Betriebsart, einer ersten Rückfallbetriebsart, sowie bei Rekuperationsbremsungen die Bremspedalcharakteristik nicht vom Betätigungszustand der restlichen Bremsanlage abhängt, wodurch das Pedalgefühl bei einer Fahrerbremsung weder durch das gleichzeitige Vorliegen einer Fremdbremsung noch durch andere Regelungsaktivitäten des Bremssystems wie Antiblockierregelung, Traktionskontrolle oder Fahrstabilitätsregelung gestört werden kann.

Die Bremsanlage hat weiterhin den Vorteil, dass eine elektronische Stabilitätsregelfunktion (ESP) einfacher realisiert werden kann, als in herkömmlichen Bremsanlagen, weil eine spezielle ESP-Hydraulik nicht benötigt wird. Bei Fahrzeugen mit der erfindungsgemäßen Bremsanlage ist eine spezielle ESP-Hydraulik überflüssig - die erfindungsgemäße Fremdbremshydraulik in Verbindung mit einem herkömmlichen ABS-System erbringt eine weit bessere Funktion. Es werden weniger elektromagnetisch betätigbare Ventile benötigt als für eine herkömmliche ESP-Hydraulik. Außerdem weist die erfindungsgemäße Bremsanlage eine bessere Energiebilanz und eine geringere Geräuschentwicklung auf, als eine herkömmliche ESP-Hydraulik, weil das dort im ESP-Betrieb erforderliche Umpumpen von Bremsflüssigkeit zum Erzeugen von Staudruck an einem Druckbegrenzungsventil entfällt.

## Patentansprüche

1. Bremsanlage für Kraftfahrzeuge vom Typ "brake-by-wire" mit
• einem Hauptzylinder (3), an den Radbremskreise (I,II) angeschlossen sind,
• einem ersten Kolben (11), der über eine Betätigungskräfte übertragende Druckstange (10) mit einem Bremspedal (9) gekoppelt ist,
• einem zweiten Kolben (12), über den der Hauptzylinder (3) betätigt wird,
• einem dritten Kolben (13), der vom ersten Kolben (11) betätigbar ist, und der in eine kraftübertragende Verbindung mit dem zweiten Kolben (12) bringbar ist,
• mit mindestens einem elastischen Element (27,28), das einen Pedalwegsimulator bildet, der in der Betriebsart "brake-by-wire" dem Fahrzeugführer ein angenehmes Pedalgefühl vermittelt,
• mit einem mit hydraulischem Druck beaufschlagbaren Zwischenraum (21) zwischen dem zweiten (12) und dritten Kolben (13), wobei eine Druckbeaufschlagung des Zwischenraums (21) den zweiten und den dritten Kolben (12, 13) in entgegen gesetzter Richtung belastet,
• mit einer vom dritten Kolben (13) begrenzten, hydraulischen, mittels eines Sperrventils (53) absperrbaren Klammer (17), mit der bei Bedarf eine Bewegung des dritten Kolbens (13) in Betätigungsrichtung verhindert wird,
• mit einer Druckbereitstellungseinrichtung (33), die unter Hochdruck stehendes Druckmittel zum Befüllen des Zwischenraums (21) bereithält,
• mit einem unter Atmosphärendruck stehenden ersten Druckmittelvorratsbehälter (42), der aus dem Zwischenraum (21) abströmendes Druckmittel aufnimmt,
• mit einem an die Druckbereitstellungseinrichtung (33) und den ersten Druckmittelvorratsbehälter (42) hydraulisch angeschlossenen Druckregelventil (34) zur Regelung des im Zwischenraum (21) eingesteuerten Druckes, das unter Zwischenschaltung von Betätigungskraftübertragungsmitteln (52,35) mit einer Betätigungskraft ansteuerbar ist, sowie
• mit Mitteln (39,40,34) zur elektrischen Regelung des Drucks im Zwischenraum (21),
**dadurch gekennzeichnet, dass** bei der elektrischen Regelung die Einsteuerung des Druckes im Zwischenraum (21) über das Druckregelventil (34) erfolgt.

2. Bremssystem nach Anspruch 1 **dadurch gekennzeichnet, dass** das Druckregelventil (34) sowohl pedal- als auch hydraulisch ansteuerbar ausgebildet ist.

3. Bremssystem nach Anspruch 2 **dadurch gekennzeichnet, dass** die Druckbereitstellungseinrichtung (33), das Druckregelventil (34), der Zwischenraum (21) sowie der erste Druckmittelvorratsbehälter (42) einem ersten Bremskraftverstärkerdruckmittelkreis zugeordnet sind und dass während des Betriebs des Bremssystems zwischen dem ersten Bremskraftverstärkerdruckmittelkreis und den Radbremskreisen (I,II) kein Druckmittelaustausch stattfindet.

4. Bremssystem nach Anspruch 3 **dadurch gekennzeichnet, dass** die Betätigungskraftübertragungsmittel als hydraulische Kraftübertragungsmittel (52,35) ausgebildet sind.

5. Bremssystem nach Anspruch 4 **dadurch gekennzeichnet, dass** die hydraulischen Kraftübertragungsmittel (52,35) einem zweiten Bremskraftverstärkerdruckmittelkreis zugeordnet sind und dass während des Betriebs des Bremssystems zwischen dem zweiten Bremskraftverstärkerdruckmittelkreis, dem ersten Bremskraftverstärkerdruckmittelkreis und den Radbremskreisen (I,II) kein Druckmittelaustausch stattfindet.

6. Bremssystem nach Anspruch 1 **dadurch gekennzeichnet, dass** der zweite Bremskraftverstärkerdruckmittelkreis durch eine an die Kammer (17) angeschlossene erste Druckmittelleitung (51), eine hydraulische Anordnung (35), die der Betätigung des Druckregelventils (34) dient, eine zweite Druckmittelleitung (52), sowie einen zweiten, unter Atmosphärendruck stehenden Druckmittelvorratsbehälter (18) gebildet ist, mit dem die zweite Druckmittelleitung (52) verbindbar ist.

7. Bremssystem nach Anspruch 6 **dadurch gekennzeichnet, dass** die hydraulische Anordnung (35) durch einen ersten Druckraum (46), der über die erste Druckmittelleitung (51) an die Kammer (17) angeschlossen ist, einen zweiten Druckraum (47), der über die zweite Druckmittelleitung (52) mit dem zweiten Druckmittelvorratsbehälter (18) verbindbar ist, sowie einen die Druckräume (46,47) voneinander trennenden Stufenkolben (48) gebildet ist, von dem eine Kraft auf einen Ventilkörper des Druckregelventils (34) übertragbar ist.

8. Bremssystem nach Anspruch 7 **dadurch gekennzeichnet, dass** der zweite Druckraum (47) von der Fläche (50) des Stufenkolbens (48) mit größerem Querschnitt begrenzt wird, während der erste Druckraum (46) als Ringraum ausgebildet ist, der von der Ringfläche (49) des Stufenkolbens (48) begrenzt wird.

9. Bremssystem nach einem der Ansprüche 1 bis 8 **dadurch gekennzeichnet, dass** das die Kammer (17) absperrende Sperrventil (53) parallel zur hydraulischen Anordnung (35) zwischen der ersten (51) und der zweiten Druckmittelleitung (52) geschaltet ist.

10. Bremssystem nach Anspruch 9 **dadurch gekennzeichnet, dass** das Sperrventil (53) als ein elektrisch schaltbares 2/2-Wegeventil ausgebildet ist.

11. Bremssystem nach einem der Ansprüche 7 bis 10 **dadurch gekennzeichnet, dass** eine hydraulische Vorsteuerkammer (36) vorgesehen ist, die von der Fläche des Stufenkolbens (48) mit kleinerem Querschnitt einerseits und dem Ventilkörper des Druckregelventils (34) andererseits begrenzt wird, mit dem von der Druckbereitstellungseinrichtung (33) gelieferten Druckmittel beaufschlagbar ist und mit dem ersten, unter Atmosphärendruck stehenden Druckmittelvorratsbehälter (42) verbindbar ist.

12. Bremssystem nach Anspruch 11 **dadurch gekennzeichnet, dass** sowohl in der Verbindung zwischen der Vorsteuerkammer (36) und der Druckbereitstellungseinrichtung (33) als auch in der Verbindung zwischen der Vorsteuerkammer (36) und dem ersten Druckmittelvorratsbehälter (42) elektrisch betätigbare, vorzugsweise analog regelbare 2/2-Wegeventile (39,40) geschaltet sind, die dem Aufbau bzw. dem Abbau des in der Vorsteuerkammer (36) eingesteuerten Druckes dienen.

13. Bremssystem nach Anspruch 12 **dadurch gekennzeichnet, dass** in der Verbindung zwischen der Vorsteuerkammer (36) und der Druckbereitstellungseinrichtung (33) ein stromlos geschlossenes Ventil (39) geschaltet ist, während in der Verbindung zwischen der Vorsteuerkammer (36) und dem ersten Druckmittelvorratsbehälter (42) wahlweise ein stromlos offenes Ventil (40) oder eine Parallelschaltung eines stromlos offenen (141) mit einem stromlos geschlossenen Ventil (140) geschaltet ist.

14. Bremssystem nach einem der Ansprüche 11 bis 13 **dadurch gekennzeichnet, dass** an die Vorsteuerkammer (36) ein hydraulisches Volumenaufriahmeelement (41) angeschlossen ist.

15. Bremssystem nach einem der Ansprüche 1 bis 14 **dadurch gekennzeichnet, dass** im dritten Kolben (13) eine hydraulische Druckkammer (14) ausgebildet ist, die der Erfassung einer am Bremspedal (9) wirkenden Betätigungskraft dient und einen Bestandteil der hydraulischen Kraftübertragungsmittel (14,18,52,35) bildet.

16. Bremssystem nach Anspruch 15 **dadurch gekennzeichnet, dass** die hydraulische Druckkammer (14) im dritten Kolben (13) von einem vierten Kolben (56) begrenzt wird, in dem der erste Kolben (111) abgedichtet geführt wird, wobei der erste Kolben (111) im dritten Kolben (113) einen an den dem zweiten Bremskraftverstärkerdruckmittelkreis zugeordneten zweiten, unter Atmosphärendruck stehenden Druckmittelvorratsbehälter (118) angeschlossenen Absperrraum (57) begrenzt.

17. Bremssystem nach Anspruch 16 **dadurch gekennzeichnet, dass** der vierte Kolben (56) die den Pedalwegsimulator bildenden Elemente (127,128) aufnimmt.

18. Bremssystem nach Anspruch 16 oder 17 **dadurch gekennzeichnet, dass** der Absperrraum (57) mit dem Innenraum des vierten Kolbens (56) verbunden ist.

19. Bremssystem nach Anspruch 17 oder 18 **dadurch gekennzeichnet, dass** der Pedalwegsimulator durch eine zwischen dem ersten Kolben (111) und dem vierten Kolben (56) eingespannte Druckfeder (127) sowie eine sich am vierten Kolben (56) abstützende, zur Druckfeder (127) parallel geschaltete Elastomerfeder (128) gebildet wird, über die ein Anteil der Betätigungskraft vom ersten Kolben (111) auf den vierten Kolben (56) übertragbar ist.

20. Bremssystem nach Anspruch 16 oder 17 **dadurch gekennzeichnet, dass** der erste Kolben (111) Luftführungskanäle (131,132) mit strömungsrichtungsabhängiger Drosselwirkung aufweist, die den Innenraum des vierten Kolbens (56) mit der Atmosphäre verbinden.

21. Bremssystem nach Anspruch 15 **dadurch gekennzeichnet, dass** die hydraulische Druckkammer (14) im dritten Kolben (113) vom vierten Kolben (56) begrenzt wird, wobei der erste Kolben (111) im dritten Kolben (113) einen an den zweiten, unter Atmosphärendruck stehenden Druckmittelvorratsbehälter (18) anschließbaren Absperrraum (57) begrenzt, wobei die Druckkammer (14) mit dem zweiten Druckmittelvorratsbehälter (18) in absperrbarer Verbindung steht und mit dem zweiten Druckraum (47) der hydraulischen Anordnung (35) verbunden ist.

22. Bremssystem nach Anspruch 15 **dadurch gekennzeichnet, dass** die hydraulische Druckkammer (14) mit einer hydraulischen Simulatorkammer (25) in absperrbarer Verbindung steht, die von einem hydraulischen Simulatorkolben (26) begrenzt wird, der mit den den Pedalwegsimulator bildenden Elementen (27,28) in kraftübertragender Verbindung steht.

23. Bremssystem nach Anspruch 22 **dadurch gekennzeichnet, dass** die Verbindung zwischen der hydraulischen Druckkammer (14) mit der hydraulischen Simulatorkammer (25) durch eine Bewegung des dritten Kolbens (13) absperrbar ist.

24. Bremssystem nach einem der Ansprüche 22 bis 23 **dadurch gekennzeichnet, dass** pneumatische Mittel (30, 31, 32,) mit strömungsrichtungsabhängiger Drosselwirkung zur Dämpfung der Bewegung des Simulatorkolbens (26) vorgesehen sind.

25. Bremssystem nach einem der Ansprüche 1 bis 24 **dadurch gekennzeichnet, dass** ein Drucksensor (58) zum Erfassen des in der Kammer (17) herrschenden Druckes vorgesehen ist.

26. Bremssystem nach einem der Ansprüche 1 bis 25 **dadurch gekennzeichnet, dass** ein Drucksensor (45) zum Erfassen des im Zwischenraum (21) herrschenden Druckes vorgesehen ist.

27. Bremssystem nach einem der Ansprüche 1 bis 26 **dadurch gekennzeichnet, dass** ein Drucksensor (43) zum Erfassen des von der Druckbereitstellungseinrichtung (33) gelieferten Druckes vorgesehen ist.

28. Bremssystem nach einem der Ansprüche 11 bis 14 **dadurch gekennzeichnet, dass** ein Drucksensor (59) zum Erfassen des in der Vorsteuerkammer (36) herrschenden Druckes vorgesehen ist.

29. Bremssystem nach einem der Ansprüche 7 oder 8 **dadurch gekennzeichnet, dass** ein Drucksensor (60) zum Erfassen des im zweiten Druckraum (47) der hydraulischen Anordnung (35) herrschenden Druckes vorgesehen ist.

30. Bremssystem nach einem der Ansprüche 1 bis 29 **dadurch gekennzeichnet, dass** zwischen dem zweiten (12) und dem dritten Kolben (13) ein Druckübersetzungskolben (16) vorgesehen ist.

31. Bremssystem nach einem der Ansprüche 1 bis 30 **dadurch gekennzeichnet, dass** Mittel (19) zur Erfassung des vom ersten Kolben (11) zurück gelegten Weges vorgesehen sind.

32. Bremssystem nach Anspruch 30 **dadurch gekennzeichnet, dass** Mittel (23) zur Erfassung des vom Druckübersetzungskolben (16) zurück gelegten Weges vorgesehen sind.

33. Bremssystem nach einem der Ansprüche 1 bis 32 **dadurch gekennzeichnet, dass** ein der Druckbereitstellungseinrichtung (33) zugeordnetes Motor-Pumpen-Aggregat (38) als eine eigenständige Baugruppe ausgebildet ist.

## Claims

1. Motor vehicle braking system of the "brake-by-wire" type, having
• a master cylinder (3) to which wheel brake circuits (I,II) are connected,
• a first piston (11) which is coupled to a brake pedal (9) via a thrust rod (10) which transmits actuating forces,
• a second piston (12) which is actuated by means of the master cylinder (3),
• a third piston (13) which can be actuated by the first piston (11) and which can be placed in force-transmitting connection with the second piston (12),
• having at least one elastic element (27, 28) which forms a pedal travel simulator which provides the vehicle driver with an acceptable pedal feel in the "brake-by-wire" operating mode,
• having an intermediate chamber (21), which can be hydraulically pressurized, between the second piston (12) and third piston (13), with a pressurization of the intermediate chamber (21) loading the second and third pistons (12, 13) in opposite directions,
• having a hydraulic chamber (17) which is bounded by the third piston (13) and which can be shut off by means of a shut-off valve (53) and by means of which a movement of the third piston (13) in the actuating direction is prevented if required,
• having a pressure generating device (33) which provides highly pressurized pressure medium for filling the intermediate chamber (21),
• having a first pressure medium reservoir (42) which is at atmospheric pressure and which receives pressure medium flowing out of the intermediate chamber (21),
• having a pressure regulating valve (34), which is hydraulically connected to the pressure generating device (33) and to the first pressure medium reservoir (42), for regulating the pressure which is set in the intermediate chamber (21), which pressure regulating valve (34) can, with the interposition of actuating force transmitting means (52, 35), be activated with an actuating force, and
• having means (39,40,34) for the electrical regulation of the pressure in the intermediate chamber (21),
**characterized in that**, during the electrical regulation, the pressure in the intermediate chamber (21) is set by means of the pressure regulating valve (34).

2. Braking system according to Claim 1, **characterized in that** the pressure regulating valve (34) is designed such that it can be both pedal-activated and also hydraulically activated.

3. Braking system according to Claim 2, **characterized in that** the pressure generating device (33), the pressure regulating valve (34), the intermediate chamber (21) and the first pressure medium reservoir (42) are assigned to a first brake force booster pressure medium circuit, and **in that**, during the operation of the braking system, no exchange of pressure medium takes place between the first brake force booster pressure medium circuit and the wheel brake circuits (I,II).

4. Braking system according to Claim 3, **characterized in that** the actuating force transmitting means are embodied as hydraulic force transmitting means (52,35).

5. Braking system according to Claim 4, **characterized in that** the hydraulic force transmitting means (52,35) are assigned to a second brake force booster pressure medium circuit, and **in that**, during the operation of the braking system, no exchange of pressure medium takes place between the second brake force booster pressure medium circuit, the first brake force booster pressure medium circuit and the wheel brake circuits (I, II) .

6. Braking system according to Claim 1, **characterized in that** the second brake force booster pressure medium circuit is formed by a first pressure medium line (51) which is connected to the chamber (17), a hydraulic arrangement (35) which serves to actuate the pressure regulating valve (34), a second pressure medium line (52), and a second pressure medium reservoir (18) which is at atmospheric pressure and to which the second pressure medium line (52) can be connected.

7. Braking system according to Claim 6, **characterized in that** the hydraulic arrangement (35) is formed by a first pressure chamber (46) which is connected to the chamber (17) via the first pressure medium line (51), a second pressure chamber (47) which can be connected by means of the second pressure medium line (52) to the second pressure medium reservoir (18), and a stepped piston (48) which separates the pressure chambers (46, 47) from one another and by means of which a force can be transmitted to a valve body of the pressure regulating valve (34).

8. Braking system according to Claim 7, **characterized in that** the second pressure chamber (47) is bounded by that surface (50) of the stepped piston (48) which has the relatively large cross section, while the first pressure chamber (46) is formed as an annular chamber which is bounded by the annular surface (49) of the stepped piston (48).

9. Braking system according to one of Claims 1 to 8, **characterized in that** the shut-off valve (53) which shuts off the chamber (17) is connected in parallel with the hydraulic arrangement (35) between the first pressure medium line (51) and the second pressure medium line (52).

10. Braking system according to Claim 9, **characterized in that** the shut-off valve (53) is embodied as an electrically switchable 2/2-way valve.

11. Braking system according to one of Claims 7 to 10, **characterized in that** a hydraulic pilot control chamber (36) is provided which is bounded at one side by that surface of the stepped piston (48) which has the relatively small cross section and at the other side by the valve body of the pressure regulating valve (34), can be charged with the pressure medium supplied by the pressure generating device (33) and can be connected to the first pressure medium reservoir (42) which is at atmospheric pressure.

12. Braking system according to Claim 11,
**characterized in that** electrically actuable, 2/2-way valves (39,40), which can preferably be regulated in analogue fashion, are positioned both in the connection between the pilot control chamber (36) and the pressure generating device (33) and also in the connection between the pilot control chamber (36) and the first pressure medium reservoir (42), which 2/2-way valves (39,40) serve for building up and dissipating the pressure which is set in the pilot control chamber (36).

13. Braking system according to Claim 12, **characterized in that** a valve (39) which is closed in the currentless state is positioned in the connection between the pilot control chamber (36) and the pressure generating device (33), while optionally a valve (40) which is open in the currentless state, or a parallel connection of a valve (141) which is open in the currentless state and a valve (140) which is closed in the currentless state, is positioned in the connection between the pilot control chamber (36) and the first pressure medium reservoir (42).

14. Braking system according to one of Claims 11 to 13, **characterized in that** a hydraulic volume-receiving element (41) is connected to the pilot control chamber (36).

15. Braking system according to one of Claims 1 to 14, **characterized in that** a hydraulic pressure chamber (14), which serves for the measurement of an actuating force acting on the brake pedal (9) and which forms a constituent part of the hydraulic force transmitting means (14,18,52,35), is formed in the third piston (13).

16. Braking system according to Claim 15, **characterized in that** the hydraulic pressure chamber (14) in the third piston (13) is bounded by a fourth piston (56) in which the first piston (111) is guided in a sealed fashion, with the first piston (111) in the third piston (113) bounding a shut-off chamber (57) which is connected to the second pressure medium reservoir (118) which is assigned to the second brake force booster pressure medium circuit and is under atmospheric pressure.

17. Braking system according to Claim 16, **characterized in that** the fourth piston (56) holds the elements (127,128) which form the pedal travel simulator.

18. Braking system according to Claim 16 or 17, **characterized in that** the shut-off chamber (57) is connected to the interior space of the fourth piston (56).

19. Braking system according to Claim 17 or 18, **characterized in that** the pedal travel simulator is formed by a pressure spring (127), which is braced between the first piston (111) and the fourth piston (56), and an elastomer spring (128) which is supported on the fourth piston (56) and is positioned in parallel with the pressure spring (127) and via which a proportion of the actuating force can be transmitted from the first piston (111) to the fourth piston (56).

20. Braking system according to Claim 16 or 17, **characterized in that** the first piston (111) has air-guiding ducts (131,132) with a flow-direction-dependent throttling action, which air-guiding ducts (131,132) connect the interior space of the fourth piston (56) to the atmosphere.

21. Braking system according to Claim 15,
**characterized in that** the hydraulic pressure chamber (14) in the third piston (113) is bounded by the fourth piston (56), with the first piston (111) in the third piston (113) bounding a shut-off chamber (57) which can be connected to the second pressure medium reservoir (18) which is at atmospheric pressure, with the pressure chamber (14) having a connection, which can be shut off, to the second pressure medium reservoir (18) and being connected to the second pressure chamber (47) of the hydraulic arrangement (35).

22. Braking system according to Claim 15,
**characterized in that** the hydraulic pressure chamber (14) has a connection, which can be shut off, to a hydraulic simulator chamber (25) which is bounded by a hydraulic simulator piston (26) which is connected in force-transmitting fashion to the elements (27, 28) which form the pedal travel simulator.

23. Braking system according to Claim 22, **characterized in that** the connection between the hydraulic pressure chamber (14) and the hydraulic simulator chamber (25) can be shut off as a result of a movement of the third piston (13).

24. Braking system according to one of Claims 22 to 23, **characterized in that** pneumatic means (30,31,32) with a flow-direction-dependent throttling action are provided for damping the movement of the simulator piston (26).

25. Braking system according to one of Claims 1 to 24, **characterized in that** a pressure sensor (58) is provided for measuring the pressure prevailing in the chamber (17).

26. Braking system according to one of Claims 1 to 25, **characterized in that** a pressure sensor (45) is provided for measuring the pressure prevailing in the intermediate chamber (21).

27. Braking system according to one of Claims 1 to 26, **characterized in that** a pressure sensor (43) is provided for measuring the pressure supplied by the pressure generating device (33).

28. Braking system according to one of Claims 11 to 14, **characterized in that** a pressure sensor (59) is provided for measuring the pressure prevailing in the pilot control chamber (36).

29. Braking system according to one of Claims 7 or 8, **characterized in that** a pressure sensor (60) is provided for measuring the pressure prevailing in the second pressure chamber (47) of the hydraulic arrangement (35).

30. Braking system according to one of Claims 1 to 29, **characterized in that** a pressure boosting piston (16) is provided between the second piston (12) and the third piston (13).

31. Braking system according to one of Claims 1 to 30, **characterized in that** means (19) are provided for measuring the distance travelled by the first piston (11).

32. Braking system according to Claim 30, **characterized in that** means (23) are provided for measuring the distance travelled by the pressure boosting piston (16).

33. Braking system according to one of Claims 1 to 32, **characterized in that** a motor-pump unit (38) which is assigned to the pressure generating device (33) is designed as a separate assembly.

## Revendications

1. Installation de freinage pour véhicules automobiles du type "freinage par câble", comprenant :
- un cylindre principal (3) auquel sont raccordés des circuits de frein de roue (I, II),
- un premier piston (11) qui est accouplé à une pédale de frein (9) par le biais d'une tige de pression (10) transmettant les forces d'actionnement,
- un deuxième piston (12) par le biais duquel le cylindre principal (3) est actionné,
- un troisième piston (13) qui peut être actionné par le premier piston (11), et qui peut être amené en liaison de transfert de force avec le deuxième piston (12),
- avec au moins un élément élastique (27, 28), qui forme un simulateur de course de pédale qui confère au conducteur du véhicule une sensation de pédale agréable en mode de fonctionnement de "freinage par câble",
- avec un espace intermédiaire (21) pouvant être sollicité avec une pression hydraulique, entre le deuxième (12) et le troisième (13) piston, une sollicitation en pression de l'espace intermédiaire (21) contraignant le deuxième et le troisième piston (12, 13) dans des directions opposées,
- avec une chambre hydraulique (17) limitée par le troisième piston (13), pouvant être bloquée au moyen d'une soupape d'arrêt (53), avec laquelle au besoin un mouvement du troisième piston (13) dans la direction d'actionnement peut être empêché,
- avec un dispositif de fourniture de pression (33), qui fournit un fluide sous pression à haute pression pour remplir l'espace intermédiaire (21),
- avec un premier réservoir de fluide sous pression (42) à la pression atmosphérique, qui reçoit du fluide sous pression s'écoulant de l'espace intermédiaire (21),
- avec une soupape de régulation de la pression (34) raccordée hydrauliquement au dispositif de fourniture de pression (33) et au premier réservoir de fluide sous pression (42), pour la régulation de la pression commandée dans l'espace intermédiaire (21), qui peut être commandée avec une force d'actionnement en interposant des moyens de transfert de force d'actionnement (52, 35), et
- avec des moyens (39, 40, 34) pour la régulation électrique de la pression dans l'espace intermédiaire (21),
**caractérisée en ce que** dans le cas de la régulation électrique, la commande de la pression dans l'espace intermédiaire (21) s'effectue par le biais de la soupape de régulation de pression (34).

2. Système de freinage selon la revendication 1, **caractérisé en ce que** la soupape de régulation de la pression (34) est réalisée de manière à pouvoir être commandée à la fois par une pédale et de manière hydraulique.

3. Système de freinage selon la revendication 2, **caractérisé en ce que** le dispositif de fourniture de pression (33), la soupape de régulation de la pression (34), l'espace intermédiaire (21) ainsi que le premier réservoir de fluide sous pression (42) sont associés à un premier circuit de fluide sous pression d'amplification de la force de freinage, et **en ce que** pendant le fonctionnement du système de freinage, aucun échange de fluide sous pression n'a lieu entre le premier circuit de fluide sous pression d'amplification de la force de freinage et les circuits de frein de roue (I, II).

4. Système de freinage selon la revendication 3, **caractérisé en ce que** les moyens de transfert de la force d'actionnement sont réalisés sous forme de moyens de transfert de force hydrauliques (52, 35).

5. Système de freinage selon la revendication 4, **caractérisé en ce que** les moyens de transfert de force hydrauliques (52, 35) sont associés à un deuxième circuit de fluide sous pression d'amplification de la force de freinage, et **en ce que** pendant le fonctionnement du système de freinage, aucun échange de fluide sous pression n'a lieu entre le deuxième circuit de fluide sous pression d'amplification de la force de freinage, le premier circuit de fluide sous pression d'amplification de la force de freinage et les circuits de frein de roue (I, II).

6. Système de freinage selon la revendication 1, **caractérisé en ce que** le deuxième circuit de fluide sous pression d'amplification de la force de freinage est formé par une première conduite de fluide sous pression (51) raccordée à la chambre (17), un agencement hydraulique (35), qui sert à actionner la soupape de régulation de la pression (34), une deuxième conduite de fluide sous pression (52), ainsi qu'un deuxième réservoir de fluide sous pression (18) à la pression atmosphérique, avec lequel la deuxième conduite de fluide sous pression (52) peut être connectée.

7. Système de freinage selon la revendication 6, **caractérisé en ce que** l'agencement hydraulique (35) est formé par un premier espace de pression (46), qui est raccordé par le biais de la première conduite de fluide sous pression (51) à la chambre (17), un deuxième espace de pression (47), qui peut être connecté au deuxième réservoir de fluide sous pression (18) par le biais de la deuxième conduite de fluide sous pression (52), ainsi qu'un piston étagé (48) séparant l'un de l'autre les espaces de pression (46, 47), par le biais duquel une force peut être transférée à un corps de soupape de la soupape de régulation de la pression (34).

8. Système de freinage selon la revendication 7, **caractérisé en ce que** le deuxième espace de pression (47) est limité par la surface (50) du piston étagé (48) de plus grande section transversale, tandis que le premier espace de pression (46) est réalisé sous forme d'espace annulaire qui est limité par la surface annulaire (49) du piston étagé (48).

9. Système de freinage selon l'une quelconque des revendications 1 à 8, **caractérisé en ce que** la soupape d'arrêt (53) bloquant la chambre (17) est montée parallèlement à l'agencement hydraulique (35) entre la première (51) et la deuxième (52) conduite de fluide sous pression.

10. Système de freinage selon la revendication 9,
**caractérisé en ce que** la soupape d'arrêt (53) est réalisée sous forme de soupape à 2/2 voies commutable électriquement.

11. Système de freinage selon l'une quelconque des revendications 7 à 10, **caractérisé en ce qu'**il est prévu une chambre de pré-commande hydraulique (36) qui est limitée par la surface du piston étagé (48) de plus petite section transversale d'une part, et par le corps de soupape de la soupape de régulation de la pression (34) d'autre part, qui peut être sollicitée par du fluide sous pression fourni par le dispositif de fourniture de pression (33) et qui peut être connectée au premier réservoir de fluide sous pression (42) à la pression atmosphérique.

12. Système de freinage selon la revendication 11,
**caractérisé en ce que** dans la connexion entre la chambre de pré-commande (36) et le dispositif de fourniture de pression (33), ainsi que dans la connexion entre la chambre de pré-commande (36) et le premier réservoir de fluide sous pression (42), sont montées des soupapes à 2/2 voies (39, 40) à commande électrique, de préférence réglables de manière analogique, qui servent à augmenter ou diminuer la pression commandée dans la chambre de pré-commande (36).

13. Système de freinage selon la revendication 12, **caractérisé en ce que** dans la connexion entre la chambre de pré-commande (36) et le dispositif de fourniture de pression (33) est montée une soupape fermée en l'absence de courant (39), tandis que dans la connexion entre la chambre de pré-commande (36) et le premier réservoir de fluide sous pression (42) est montée, de manière sélective, une soupape ouverte en l'absence de courant (40) ou un montage en parallèle d'une soupape ouverte en l'absence de courant (141) et d'une soupape fermée en l'absence de courant (140).

14. Système de freinage selon l'une quelconque des revendications 11 à 13, **caractérisé en ce que** l'on raccorde à la chambre de pré-commande (36) un élément de réception de volume hydraulique (41).

15. Système de freinage selon l'une quelconque des revendications 1 à 14, **caractérisé en ce que** dans le troisième piston (13) est réalisée une chambre de pression hydraulique (14), qui sert à détecter une force d'actionnement agissant sur la pédale de frein (9), et qui forme un constituant des moyens de transfert de force hydrauliques (14, 18, 52, 35).

16. Système de freinage selon la revendication 15, **caractérisé en ce que** la chambre de pression hydraulique (14) est limitée dans le troisième piston (13) par un quatrième piston (56), dans lequel le premier piston (111) est guidé de manière hermétique, le premier piston (111) limitant dans le troisième piston (113) un espace d'arrêt (57) raccordé au deuxième réservoir de fluide sous pression (118) à la pression atmosphérique, associé au deuxième circuit de fluide sous pression d'amplification de la force de freinage.

17. Système de freinage selon la revendication 16, **caractérisé en ce que** le quatrième piston (56) reçoit les éléments (127, 128) formant le simulateur de la course de la pédale.

18. Système de freinage selon la revendication 16 ou 17, **caractérisé en ce que** l'espace d'arrêt (57) est connecté à l'espace interne du quatrième piston (56).

19. Système de freinage selon la revendication 17 ou 18, **caractérisé en ce que** le simulateur de la course de la pédale est formé par un ressort de pression (127) tendu entre le premier piston (111) et le quatrième piston (56), ainsi que par un ressort en élastomère (128) monté en parallèle avec le ressort de pression (127) et s'appuyant contre le quatrième piston (56), par le biais desquels une proportion de la force d'actionnement du premier piston (111) au quatrième piston (56) peut être transmise.

20. Système de freinage selon la revendication 16 ou 17, **caractérisé en ce que** le premier piston (111) présente des canaux de guidage d'air (131, 132) avec un effet d'étranglement dépendant du sens de l'écoulement, qui relient l'espace intérieur du quatrième piston (56) à l'atmosphère.

21. Système de freinage selon la revendication 15, **caractérisé en ce que** la chambre de pression hydraulique (14) dans le troisième piston (113) est limitée par le quatrième piston (56), le premier piston (111) limitant dans le troisième piston (113) un espace d'arrêt (57) pouvant être raccordé au deuxième réservoir de fluide sous pression (18) à la pression atmosphérique, la chambre de pression (14) étant en liaison blocable avec le deuxième réservoir de fluide sous pression (18) et étant connectée au deuxième espace de pression (47) de l'agencement hydraulique (35).

22. Système de freinage selon la revendication 15, **caractérisé en ce que** la chambre de pression hydraulique (14) est en liaison blocable avec une chambre de simulation hydraulique (25), qui est limitée par un piston de simulation hydraulique (26) qui est en liaison de transfert de force avec les éléments (27, 28) formant le simulateur de la course de la pédale.

23. Système de freinage selon la revendication 22, **caractérisé en ce que** la connexion entre la chambre de pression hydraulique (14) et la chambre de simulation hydraulique (25) peut être bloquée par un déplacement du troisième piston (13).

24. Système de freinage selon l'une quelconque des revendications 22 à 23, **caractérisé en ce que** des moyens pneumatiques (30, 31, 32) avec un effet d'étranglement dépendant du sens de l'écoulement sont prévus pour l'amortissement du déplacement du piston de simulation (26).

25. Système de freinage selon l'une quelconque des revendications 1 à 24, **caractérisé en ce qu'**un capteur de pression (58) est prévu pour détecter la pression régnant dans la chambre (17).

26. Système de freinage selon l'une quelconque des revendications 1 à 25, **caractérisé en ce qu'**un capteur de pression (45) est prévu pour détecter la pression régnant dans l'espace intermédiaire (21).

27. Système de freinage selon l'une quelconque des revendications 1 à 26, **caractérisé en ce qu'**un capteur de pression (43) est prévu pour détecter la pression fournie par le dispositif de fourniture de pression (33).

28. Système de freinage selon l'une quelconque des revendications 11 à 14, **caractérisé en ce qu'**un capteur de pression (59) est prévu pour détecter la pression régnant dans la chambre de pré-commande (36).

29. Système de freinage selon l'une quelconque des revendications 7 ou 8, **caractérisé en ce qu'**un capteur de pression (60) est prévu pour détecter la pression régnant dans le deuxième espace de pression (47) de l'agencement hydraulique (35).

30. Système de freinage selon l'une quelconque des revendications 1 à 29, **caractérisé en ce que** l'on prévoit un piston de multiplication de la pression (16) entre le deuxième (12) et le troisième (13) piston.

31. Système de freinage selon l'une quelconque des revendications 1 à 30, **caractérisé en ce que** l'on prévoit des moyens (19) pour détecter la course parcourue par le premier piston (11).

32. Système de freinage selon la revendication 30, **caractérisé en ce que** l'on prévoit des moyens (23) pour détecter la course parcourue par le piston de multiplication de la pression (16).

33. Système de freinage selon l'une quelconque des revendications 1 à 32, **caractérisé en ce qu'**une unité moteur-pompe (38) associée au dispositif de fourniture de pression (33) est réalisée sous forme de module autonome.
